# EUROPÄISCHE PATENTSCHRIFT

(11) **EP 0 639 721 B1**
(45) Veröffentlichungstag und Bekanntmachung des Hinweises auf die Patenterteilung: **23.04.1997**
(21) Anmeldenummer: 94110703.9
(22) Anmeldetag: 09.07.1994
(51) Int. Cl.: F16C 27/06, F16C 33/22

(54) **Gleitlager für Fahrwerksteile in Kraftfahrzeugen**
Sliding contact bearing for framework parts in motor vehicles
Palier à contact lisse pour pièces de châssis de véhicules à moteur

(30) Priorität: 16.08.1993 DE 4327474
(43) Veröffentlichungstag der Anmeldung: 22.02.1995
(73) Patentinhaber: LEMFOERDER METALLWAREN AG., D-49441 Lemförde (DE)
(72) Erfinder: Kammel, Helmut, D-49401 Damme (DE); Jördens, Ernst-Günter, D-49401 Damme (DE)

(56) Entgegenhaltungen:
- WO-A-93/13324
- DE-A- 1 425 990
- DE-A- 2 358 225
- DE-A- 2 737 898
- DE-B- 1 204 464
- DE-C- 4 036 051
- GB-A- 1 040 109
- US-A- 3 107 946

## Beschreibung

Die Erfindung bezieht sich auf ein Gleitlager für Fahrwerksteile in Kraftfahrzeugen nach dem Oberbegriff des Patentanspruches 1.

Ein solches Gleitlager ist aus der DE-C-40 36 051 bekannt. Die Gleitschicht dieses bekannten Gleitlagers ist mit dem Innenteil festhaftend verbunden. Dadurch werden Relativbewegungen zwischen der buchsenartigen Gleitschicht aus Kunststoff und dem metallischen Innenteil vor allem in Drehrichtung unterbunden. Das Innenteil besteht häufig aus Aluminium.

Aufgabe der Erfindung ist eine Gestaltung des Gleitlagers, bei der die Kosten für den Kleber und für das Aufbringen des Klebers auf das Innenteil entfallen.

Zur Lösung dieser Aufgabe wird erfindungsgemäß eine Ausbildung nach dem Kennzeichen des Patentanspruches 1 vorgeschlagen.

Die hiernach vorgesehenen Aussparungen können bei der Herstellung des Innenteils, z.B. in einem Arbeitsgang, so ausgebildet werden, daß keine merklichen Zusatzkosten entstehen. Das Einbringen des Klebers und die Kosten für den Kleber entfallen. Die Haftverbindung zwischen dem Innenteil und dem Werkstoff der Gleitschicht wird vor allem durch das formschlüssige gegenseitige Ineinandergreifen verbessert.

Die Aussparungen werden vorteilhaft als in Achsrichtung des Lagers verlaufende Längsnuten und in Umfangsrichtung verlaufende Quernuten ausgeführt, wobei diese Nuten im Querschnitt ein wenigstens einseitig ausgebildetes Schwalbenschwanzprofil aufweisen.

Eine gezielte Steifigkeitsbeeinflussung des Elastomerkörpers kann dadurch erreicht werden, daß die Aussparungen peripher versetzt, teilweise versetzt zu oder in Überdeckung mit den die Schmiermitteltaschen am Außenumfang des Elastomerkörpers bildenden Rippen oder dergleichen angeordnet sind.

In der Zeichnung ist ein Ausführungsbeispiel der Erfindungsmerkmale dargestellt. Es zeigen:
- Figur 1: ein Gleitlager zur Hälfte in Seitenansicht und zur Hälfte in einem Schnitt in einer Achsebene,
- Figur 2: einen Schnitt des Innenteils mit der aufgebrachten Gleitschicht in einer Achsebene,
- Figur 3: einen im Maßstab vergrößerten Querschnitt der Ausbildung nach Figur 2,
- Figur 4: einen Schnitt des Innenteils in einer Achsebene im Maßstab der Figur 2 und
- Figur 5: einen im Maßstab gegenüber Figur 4 vergrößerten Querschnitt des Innenteiles.

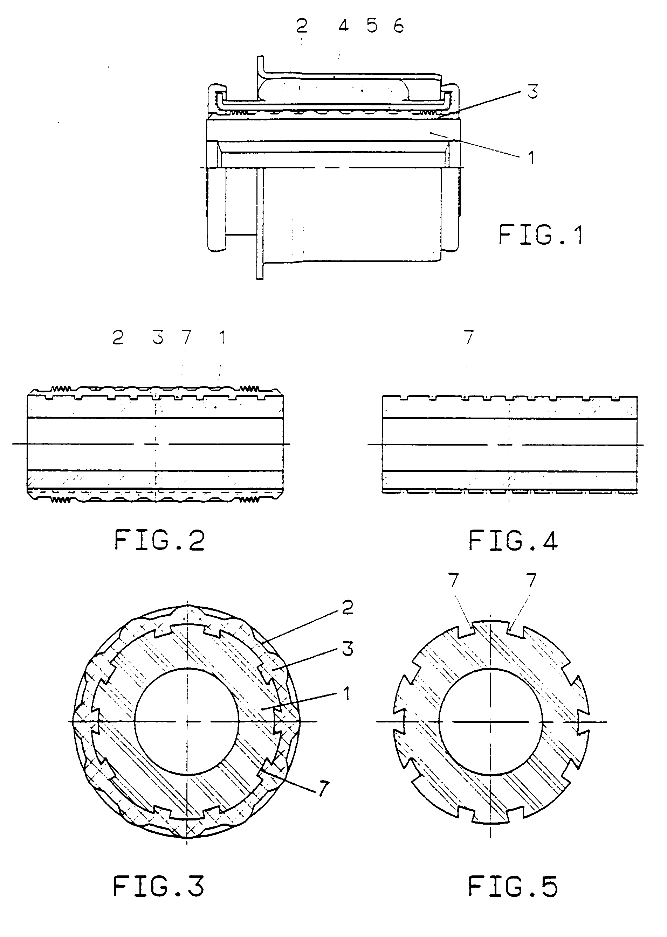

Bei dem Gleitlager entsprechend der Darstellung in Figur 1 ist auf ein aus Aluminium bestehendes Innenteil 1 eine buchsenartige, an seinem Außenmantel Schmiermitteltaschen 2 aufweisende Gleitschicht 3 aus Polyurethan oder einem anderen geeigneten Kunststoff vorgesehen, die in einer Form festhaftend aufgespritzt ist. Ein in einer metallischen Aufnahmebuchse 4 angeordneter Elastomerkörper 5 umschließt eine Außenbuchse 6 und ist auf dieser ebenfalls festhaftend angeordnet. In die Außenbuchse 6 ist das Innenteil 1 mit der darauf angeordneten Gleitschicht 3 gleitend beweglich eingesetzt. Weitere konstruktive Einzelheiten, die für die Erfindung unbedeutend sind, ergeben sich aus der Zeichnung.

Die festhaftende Verbindung der Gleitschicht 3 auf dem Außenmantel des Innenteiles 1 wird durch Aussparungen 7 am Umfang des Innenteiles 1 gemäß den Darstellungen in den Figuren 2 bis 5 erreicht. Die Aussparungen 7 sind entsprechend der Darstellung in den Figuren 4 und 5 als in Achsrichtung des Gleitlagers verlaufende Längsnuten bzw. als in Umfangsrichtung verlaufende Quernuten ausgeführt und wenigstens in der Richtung, in der die Form beim Ausformen des im Spritzverfahren aufgebrachten Polyurethans der Gleitschicht geöffnet wird, einseitig hinterschnitten, wie die Querschnittsdarstellung in der Figur 5 zeigt. Bevorzugt wird ein Querschnittsprofil der die Aussparung bildenden Nuten in der Art eines Schwalbenschwanzes. Erreicht wird dadurch, daß der Werkstoff der Gleitschicht beim Öffnen der Form nicht von der Oberfläche des Innenteiles abhebt. Diese Ausbildung ermöglicht das Weglassen eines Klebers zwischen dem Werkstoff der Gleitschicht und dem Innenteil. Andere Profilierungen der Aussparungen, die die Erfindungsmerkmale verwenden, sind denkbar.

Eine Beeinflussung der Steifigkeit des Elastomerkörpers 3 wird nach den Beispielen in den Figuren 2 und 3 dadurch erreicht, daß die Aussparungen 7 am äußeren Umfang des Innenteils zu den Rippen zwischen den Schmiermitteltaschen 2 in Anpassung an die hauptsächlichen Betriebsbelastungen des Gleitlagers gezielt versetzt angeordnet sind.

### BEZUGSZEICHENLISTE:

- 1: Innenteil
- 2: Schmiermitteltaschen
- 3: Gleitschicht
- 4: Aufnahmebuchse
- 5: Elastomerkörper
- 6: Außenbuchse
- 7: Aussparung

## Patentansprüche

1. Gleitlager für Fahrwerksteile in Kraftfahrzeugen, bei dem auf ein metallisches Innenteil (1) eine am Außenmantel Schmiermitteltaschen (2) aufweisende Gleitschicht (3) aus Kunststoff in einer Form festhaftend aufgespritzt ist und ein in einer metallischen Aufnahmebuchse (4) angeordneter Elastomerkörper (5) das Innenteil (1) mit der Gleitschicht (3) gleitend beweglich umschließt, dadurch gekennzeichnet, daß am Umfang des Innenteils (1) Aussparungen (7) vorgesehen sind, die im Querschnitt ein wenigstens einseitig ausgebildetes Schwalbenschwanzprofil aufweisen, und deren seitliche Wandung ein in Ausformrichtung hinterschnittenes Profil aufweist.

2. Gleitlager nach Anspruch 1, dadurch gekennzeichnet, daß die Aussparungen (7) als in Achsrichtung des Lagers verlaufende Längsnuten und in Umfangsrichtung verlaufende Quernuten ausgeführt sind.

3. Gleitlager nach den Ansprüchen 1 oder 2, dadurch gekennzeichnet, daß die Aussparungen (7) am äußeren Umfang des Innenteils (1) und die zwischen den Schmiermitteltaschen (2) am äußeren Umfang des Elastomerkörpers (3) liegenden Rippen oder dergleichen in Anpassung an die Betriebsbelastungen zueinander versetzt angeordnet sind.

## Claims

1. Sliding bearing for chassis parts in motor vehicles, wherein a lining (3) made of plastic material and having lubricant pockets (2) on the outer lateral surface is injected in an adherent manner onto a metal inner part (1) in a mould and an elastomeric body (5) disposed in a metal receiving bush (4) encloses the inner part (1) with the lining (3) in a slidingly movable manner, characterized in that provided on the periphery of the inner part (1) are recesses (7), which in cross section have an, at least at one side, dovetailed shape and the side wall of which has a shape which is undercut in the direction of removal from the mould.

2. Sliding bearing according to claim 1, characterized in that the recesses (7) take the form of longitudinal grooves extending in an axial direction of the bearing and transverse grooves extending in a peripheral direction.

3. Sliding bearing according to claim 1 or 2, characterized in that the recesses (7) on the outer periphery of the inner part (1) and the ribs or the like lying between the lubricant pockets (2) on the outer periphery of the elastomeric body (3) are disposed offset relative to one another by way of adaptation to the operating loads.

## Revendications

1. Palier lisse pour des pièces de châssis disposées dans des véhicules automobiles, dans lequel une couche de glissement (3) réalisée en matière plastique est appliquée de façon adhérente sur une pièce (1) interne métallique dans un moule, la couche présentant sur une enveloppe externe des poches (2) de lubrifiant, et dans lequel un corps (5) en élastomère disposé dans une douille (4) métallique de réception enferme de façon mobile en coulissement la pièce (1) interne comprenant la couche de glissement (3), caractérisé en ce que des évidements (7) sont prévus sur la périphérie de la pièce interne (1), qui présentent en section transversale, au moins d'un coté, un profil réalisé en queue d'aronde et dont la paroi latérale présente, en direction de la déformation, un profil de contre-dépouille.

2. Palier lisse selon la revendication 1, caractérisé en ce que les évidements (7) sont réalisés sous la forme de rainures longitudinales s'étendant dans la direction de l'axe du palier et sont réalisés sous la forme de rainures transversales en direction du pourtour.

3. Palier lisse selon la revendication 1 ou 2, caractérisé en ce que les évidements (7) disposés sur le pourtour externe de la pièce interne (1) et les nervures ou analogues situées entre les poches (2) de lubrifiant disposées sur le pourtour externe du corps (3) en élastomère, sont agencés de façon décalée en adaptation à la charge de fonctionnement.
